# EUROPÄISCHE PATENTSCHRIFT

(11) **EP 1 090 148 B1**
(45) Veröffentlichungstag und Bekanntmachung des Hinweises auf die Patenterteilung: **06.11.2002**
(21) Anmeldenummer: 99920783.0
(22) Anmeldetag: 26.04.1999
(51) Int. Cl.: C21C 5/52

(54) **ELEKTROLICHTBOGENOFEN**
ELECTRIC ARC FURNACE
FOUR A ARC

(30) Priorität: 08.05.1998 DE 19820589
(43) Veröffentlichungstag der Anmeldung: 11.04.2001
(73) Patentinhaber: Stein, Wilfried, 58135 Hagen (DE)
(72) Erfinder: STEIN, Wilfried, D-58135 Hagen (DE); STEIN, Karl, D-58097 Hagen (DE)
(74) Vertreter: Missling, Arne, Dipl.-Ing.
(86) Internationale Anmeldenummer: EP9902807
(87) Internationale Veröffentlichungsnummer: WO99058729

(56) Entgegenhaltungen:
- EP-A- 0 544 044
- WO-A-97/17475
- DE-A- 4 434 369
- US-A- 3 459 867
- US-A- 4 827 486
- US-A- 5 373 530

## Beschreibung

Die Erfindung betrifft einen Elektrolichtbogenofen, bei dem Feststoffe und Gase mittels Lanzen zur Erzeugung einer Schaumschlacke zur Reduktion oder Auflegierung der Schmelze oder zum Recycling von Stoffen in den Ofenraum eingeblasen werden.

Bei dem Betrieb von Elektrolichtbogenöfen ist es üblich, teilweise während des Einschmelzens, vornehmlich aber in der Warm- und Feinungsperiode, in der kein festes Eisen, sondern nur die flüssige Schmelze vorliegt, Kohlenstoff und/oder Sauerstoff durch Lanzen in den Elektrolichtbogenofen einzublasen. Die Lanzen werden mittels Lanzenmanipulatoren bewegt, wobei die Lanzen über die Schlackentür die Feststoffe oder Gase in den Ofen einblasen. Hierdurch wird einerseits dem Prozeß zusätzlich Energie zugeführt, andererseits durch die Reaktion des eingeblasenen Kohlenstoffes mit dem in der Schlacke vorliegenden Eisenoxyd unter Bildung von Kohlenmonoxyd und Kohlendioxyd die Schlacke aufgeschäumt. Die Vorteile der Erzeugung einer derartigen Schaumschlacke bestehen im wesentlichen in der verbesserten Energieübertragung von der Spitze der Graphitelektroden in die Schmelze sowie der reduzierte Feuerfestangriff durch die Umhüllung des Lichtbogens mit der Schlacke. Hierdurch bedingt, sinkt auch der spezifische Energie- und Elektrodenverbrauch. Durch die Reduktion der Schlacke wird das Ausbringen an medenverbrauch. Durch die Reduktion der Schlacke wird das Ausbringen an metallischem Eisen in Form von flüssigem Stahl verbessert, gleichzeitig verringert sich der Zeitbedarf für die gesamte Schmelze.

Darüber hinaus können über die Lanzen neben den Kohlenstoffträgern, vor allem Kalk, Filterstäube, Feinanteile aus der Eisenschwammproduktion sowie aufbereitete Schlämme in den Elektrolichtbogenofen eingeblasen werden.

Nachteilig bei diesem bekannten Verfahren ist, daß beim Einsatz von Lanzenmanipulatoren im Bereich der Schlackentür ein erheblicher Platzbedarf besteht und darüber hinaus die Lanzen häufig gewechselt werden müssen. Aufgrund des Einblasens der Zusatzstoffe im Bereich der Schlackentür wird in dem angrenzenden Bereich vorzugsweise eine hohe Schlacke erzeugt, während in den übrigen Ofenbereichen mehr oder weniger Schlacke vorhanden ist. Dies bringt wesentliche Nachteile mit sich. Insbesondere findet die Schlackenschäumung nur an einer Stelle statt, so daß eine ausreichende Schlacke in dem der Schlackentür gegenüberliegenden Bereich fehlt. Dies macht sich vor allem bei Elektrolichtbogenöfen bemerkbar, welche mit einem exzentrischen Erkerabstich versehen sind. Werden zusätzlich über die Lanzen Filterstäube oder andere zu rezyklierende Feststoffe zugeführt, so ist die Menge der zugegebenen Feststoffe insofern beschränkt, weil die Zugabe sich auf eine Stelle im Ofenbereich in Anschluß an die Schlackentür konzentriert. Hierdurch treten leicht Bildungen von festen Agglomeraten auf, die nur schwer aufgeschmolzen werden können. Hinzu kommt, daß es durch die ungleiche Schlackenverteilung in erster Linie auf die Kenntnis des Bedienungspersonals ankommt, wann und in welcher Menge die Zusatzstoffe in den Elektrolichtbogenofen eingeblasen werden müssen.

Die US-A-4 827 486, die US-A-3 459 867 und die WO 97/17475 zeigen Lichtbogenöfen, bei denen in der Seitenwandung zusätzliche Brenner angeordnet sind, über die Sauerstoff oder andere brennbare Gase in dem Bereich zwischen der Ofenwand und dem Elektrodenkreis gezielt zugeführt werden können, um die Energiebilanz des Ofens zu verbessern.

Der Erfindung liegt die Aufgabe zugrunde, einen Elektrolichtbogenofen und ein Verfahren zum Betrieb des Elektrolichtbogenofens, insbesondere zum Erzeugen einer Schaumschlacke vorzuschlagen, so daß nicht nur ein wesentlich schnellerer Aufbau der Schlacke mit gleichmäßigerer Verteilung in der Fläche und in der Höhe des Ofenraumes des Elektrolichtbogenofens erhalten wird, sondern auch Zusatzstoffe in größerer Menge als bisher zugegeben werden können und der Elektrolichtbogenofen eine größere Haltbarkeit aufweist.

Diese Aufgabe wird erfindungsgemäß mit den Merkmalen des Anspruches 1 gelöst.

Durch die Anordnung der Lanzen in der Ofenwandung ist es möglich, die Zufuhr von Kohlenstoff, Gasen und sonstigen Feststoffen gezielt in den Ofenraum, verteilt über dessen Fläche, vorzunehmen, so daß eine über den Ofenraum erzeugte Schlacke mit im wesentlichen gleicher Höhe entsteht. Hierdurch wird nicht nur die Ausmauerung des Ofens wesentlich besser geschützt, sondern auch der Wirkungsgrad der eingebrachten Energie verbessert. Hierbei werden die Lanzen so ausgerichtet, daß die Einblasfläche in Strömungsrichtung der Schmelze vor den jeweiligen Elektroden liegt. Die Bildung einer gleichmäßig über den Ofenraum verteilten Schaumschlacke wird somit noch zusätzlich durch die Strömung der Schmelze unterstützt.

Die in der Ofenwand eingesetzten Teile der Lanzen, welche aus Stahl oder auch aus Kupfer bestehen können, sind wassergekühlt, was deren Haltbarkeit wesentlich verbessert. Die Mündung der Lanzen liegt dabei nicht höher als 200 mm über der Schmelzbadoberfläche.

Ein erfindungsgemäß ausgebildeter Elektrolichtbogenofen wird während der Einschmelzphase zusätzlich mit Sauerstoff und/oder Erdgas über die Lanzen beaufschlagt. Während der Warmfahrphase wird dann abwechselnd Kohlenstoff und/oder Sauerstoff über die Lanzen in den Ofen eingeblasen, um so eine ausreichende Schaumschlacke zu erzeugen. Hierbei können dann neben Kohle auch Kalk, Filterstäube, eisenhaltige Stäube, aufbereitete Schlämme und Zunder, Legierungen und/oder Mischungen dieser Stoffe über die Lanzen in den Ofen eingeblasen werden. Hierbei wird der Stoffstrom in der Förderleitung zu den Lanzen individuell gesteuert, so daß die örtlich unterschiedliche Menge an Zusatzstoffen, die verteilt über die Badfläche in den Ofen eingeblasen werden, zusätzlich zur Steuerung der Menge und damit der Verteilung der Schaumschlacke beiträgt.

Zur Förderung der Feststoffe dient vorteilhaft Preßluft, welche auch während der Stillstandszeiten, in denen keine Feststoffe über die Lanzen gefördert werden, die Lanzen durchströmen, und somit neben einer zusätzlichen Kühlung auch dazu dienen, ein Verstopfen der Lanzen zu vermeiden.

Ein Ausführungsbeispiel der Erfindung ist im folgenden anhand der Zeichnung näher beschrieben. In dieser zeigen
- Fig. 1 und Fig. 2: eine schematische Draufsicht auf einen Lichtbogenofen mit in der Ofenwandung eingesetzten Lanzen, die in Abhängigkeit der Schmelzbaddrehrichtung angeordnet sind,
- Fig. 3: einen Schnitt durch die Wandung des Elektrolichtbogenofens mit einer eingesetzten Lanze
und
- Fig. 4: eine vergrößerte Darstellung des Lanzenendes gemäß Fig. 3.

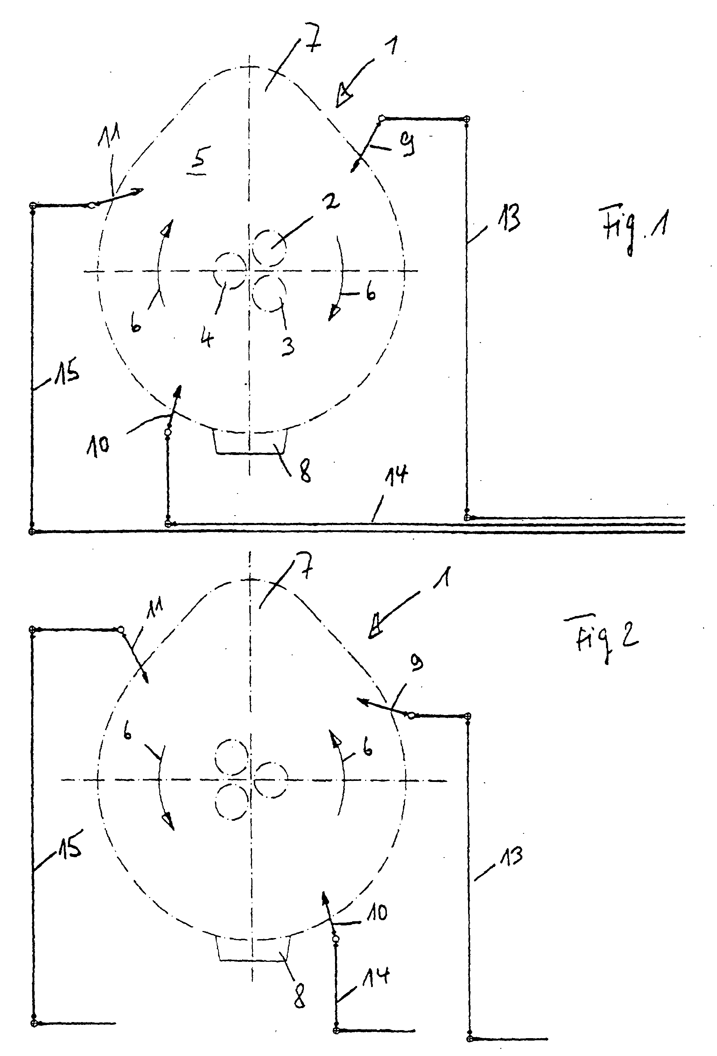

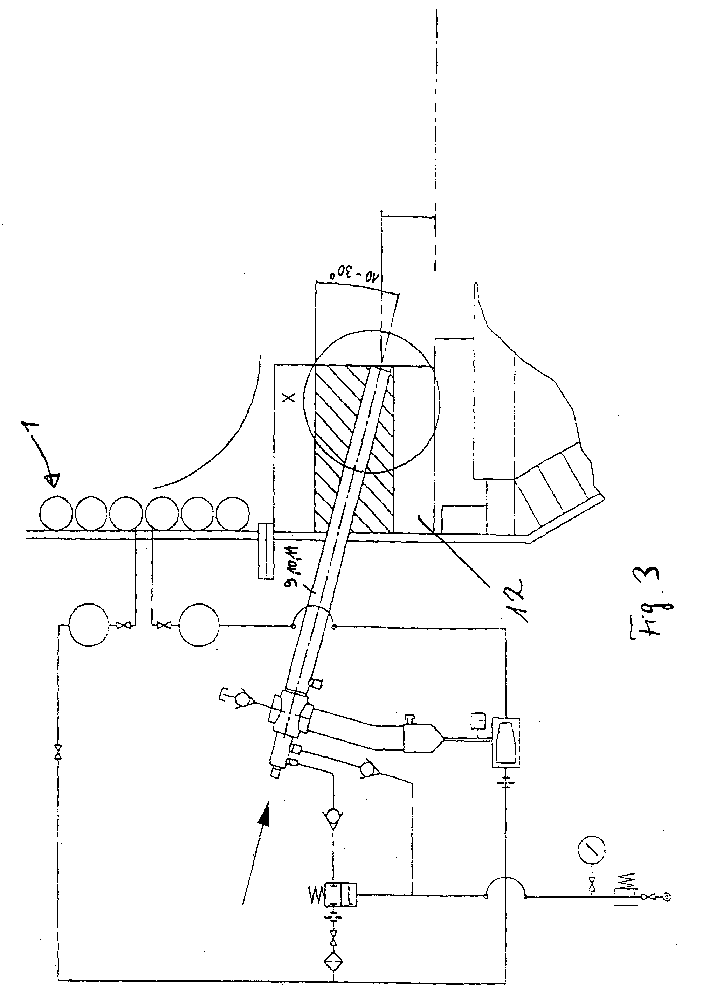

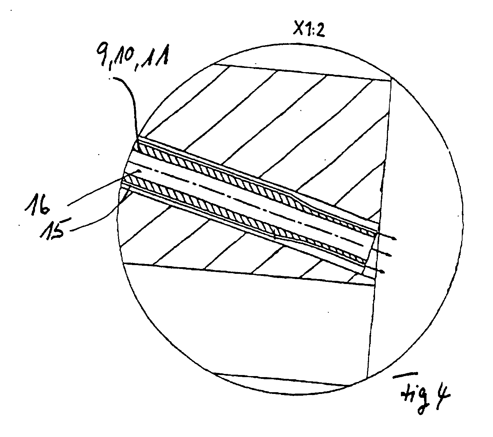

Fig. 1 zeigt eine Draufsicht auf einen erfindungsgemäß ausgebildeten Elektrolichtbogenofen 1, der drei Elektroden 2, 3, 4 aufweist. Die Pfeile 6 kennzeichnen die Drehrichtung des Schmelzbades 5. Der Abstich des Ofens befindet sich im Bereich des erkerförmigen Teiles 7 des Elektrolichtbogenofens 1. Diesem erkerförmigen Teil 7 ist die Ofentür 8 gegenüberliegend angeordnet. In der Ofenwandung sind drei Lanzen 9, 10 und 11 angeordnet, welche eine Neigung zur Strömungsrichtung 6 des Schmelzbades 5 aufweisen, welche einen Winkel von 30 bis 80° zu dieser haben. Des weiteren sind die Lanzen 9, 10, 11 auch zur Horizontalen geneigt, wobei hier ein Winkel von 10 bis 30° eingehalten wird. Der Einbau der Lanzen 9, 10, 11 in die Ofenwand 12 ist aus Fig. 3 ersichtlich. Durch die Neigung der Lanzen zur Horizontalen und ihre Neigung zur Strömungsrichtung kann eine Schaumschlacke erzeugt werden, welche sich im wesentlichen gleichmäßig über das Schmelzbad 5 des Elektrolichtbogenofens 1 erstreckt. Hierbei liegt die Einblasfläche der Lanzen in Strömungsrichtung gesehen jeweils vor einer Elektrode, so daß sichergestellt ist, daß der am stärksten beanspruchte Wandbereich des Elektrolichtbogenofens immer mit einer ausreichenden Schaumschlacke bedeckt gehalten werden kann. Das Lanzenende mündet in einer Höhe bis zu 200 mm oberhalb dem Schmelzbadspiegel.

Jede Lanze 9, 10, 11 ist über eine eigene Versorgungsleitung 13, 14, 15 verbunden, so daß der Förderstrom zu den einzelnen Lanzen 9, 10, 11 individuell gesteuert und so der Geometrie des Ofens Rechnung getragen werden kann.

In Fig. 2 ist ein der Fig. 1 entsprechender Elektrolichtbogenofen 1 dargestellt, wobei sich hier lediglich die Baddrehrichtung 6 geändert hat. Entsprechend wurde auch die Neigung der Lanzen zur Strömungsrichtung 6 des Schmelzbades ausgerichtet, wobei die horizontale Neigung die gleiche wie in dem Ausführungsbeispiel nach Fig. 1 ist.

Fig. 3 zeigt einen vertikalen Schnitt durch eine Ofenwand 12 des Elektrolichtbogenofens 1. Die Lanze ist hier in einem Winkel von ca. 30° in der Ofenwandung angeordnet, wobei diese Lanze so ausgebildet ist, daß über diese gleichzeitig Feststoffe wie auch gasförmige Stoffe zugeführt werden können. Hierzu weist die Lanze 9, 10, 11 einen Keramikeinsatz 15 auf, wobei durch die zentrale Öffnung 16 die Feststoffe, insbesondere Kohlenstoff, Kalk und zu rezyklierende Stoffe durchgeleitet werden und über den Zwischenraum zwischen dem Keramikeinsatz und dem Außenrohr gasförmige Stoffe. Durch diese besondere Konstruktion der Lanzen ist es möglich, über ein und dieselbe Lanze nacheinander oder aber auch gleichzeitig Feststoffe und gasförmige Medien zuzuführen.

Aufgrund der Verteilung der Lanzen im Elektrolichtbogenofen 1 und deren Neigung relativ zur Strömungsrichtung des Schmelzbades 5 sowie der horizontalen Neigung können die Zusatzstoffe in den Bereich des Ofens eingeblasen werden, der für die Bildung und Verteilung der Schaumschlacke optimal ist. Es ist selbstverständlich, daß nicht nur drei Lanzen in der Ofenwand angeordnet werden können, sondern auch noch mehr, falls dies die Geometrie des Ofens erfordert. versuche haben jedoch gezeigt, daß die Anordnung von drei Lanzen ausreichend ist.

### Bezugszeichen:

- Elektrolichtbogenofen -: 1
- Elektrode -: 2, 3, 4
- Schmelzbad -: 5
- Schmelzbaddrehrichtung -: 6
- Erkerabstich -: 7
- Ofentür -: 8
- Lanzen -: 9, 10, 11
- Förderleitung -: 9, 10, 11
- Ofenwand -: 12
- Versorgungsleitung -: 13, 14, 15
- Öffnung -: 16

## Patentansprüche

1. Elektrolichtbogenofen (1), bei dem Feststoffe und Gase mittels Lanzen (9, 10, 11) zur Erzeugung einer Schaumschlacke zur Reduktion oder Auflegierung der Schmelze oder zum Recycling von Stoffen in den Ofenraum eingeblasen werden,
**dadurch gekennzeichnet daß**
die Lanzen (9, 10, 11) durch die Wandung (12) des Elektrolichtbogenofens (1) geführt und in die Ofenwandung (12) eingesetzt sind, daß jeder Elektrode (2, 3, 4) mindestens eine Lanze (9, 10, 11) zugeordnet ist, wobei die Lanzen (9, 10, 11) in etwa gleichmäßig über den Umfang des Ofens (1) verteilt angeordnet werden, daß die Neigung der Lanzen (9, 10, 11) und damit der Einblaswinkel so gewählt wird, daß diese zur Strömungsrichtung (6) des Schmelzbades (5) einen Winkel von etwa 30 bis 80° und zur Horizontalen einen Winkel von etwa 10 bis 30° aufweisen, daß die von der jeweiligen Lanze (9, 10, 11) beaufschlagte Einblasfläche in Strömungsrichtung des Schmelzbades vor der Elektrode (2, 3, 4) liegt und daß mittels der Lanzen, neben Kohle, Kalk, Filterstäube, eisenhaltige Stäube (DRI) aufbereitete Schlämme und Zunder, Legierungen und/oder Mischungen dieser Stoffe in die Schmelze eingeblasen werden.

2. Elektrolichtbogenofen nach Anspruch 1, **dadurch gekennzeichnet, daß** die Höhe des Lanzenendes über der Schmelzbadoberfläche maximal 200 mm beträgt.

3. Elektrolichtbogenofen nach Anspruch 1 oder 2, **dadurch gekennzeichnet, daß** zumindest die in der Ofenwand 12 eingesetzten Teile der Lanzen (9, 10, 11) wassergekühlt sind.

4. Verfahren zum Betrieb eines Elektrotichtbogenofen nach einem der Ansprüche 1 bis 3, **dadurch gekennzeichnet, daß** zumindest während der Einschmelzphase zusätzlich Sauerstoff und/oder Erdgas über die Lanzen in den Ofen eingeblasen werden.

5. Verfahren nach Anspruch 4, **dadurch gekennzeichnet, daß** mit Beginn der Warmfahrphase abwechselnd Kohlenstoff und/oder Sauerstoff über die Lanzen in den Ofen eingeblasen werden.

6. Verfahren nach Anspruch 5, **dadurch gekennzeichnet, daß** der Stoffstrom in der Förderleitung zu jeder Lanze individuell gesteuert oder geregelt und überwacht wird.

7. Verfahren nach einem der Ansprüche 1 bis 6, **dadurch gekennzeichnet, daß** die Feststoffe über eine zentrale Öffnung (16) der Lanzen (9, 10, 11) und die Gase über einen die zentrale Öffnung (16) umgebenden Zwischenraum (15) in den Ofen eingegeben werden.

8. Verfahren nach einem der Ansprüche 4 bis 7, **dadurch gekennzeichnet, daß** die Lanzen ständig mit einem Fördergas, insbesondere Preßluft, beaufschlagt werden.

## Claims

1. An electric arc furnace (1), in which solids and gases are blown into the furnace chamber by means of lances (9, 10, 11) for generating a foamed slag for the reduction or alloying of the melt or for the recycling of materials,
**characterised in that**
the lances (9, 10, 11) are guided through the wall (12) of the electric arc furnace (1) and set into the furnace wall (12), **in that** at least one lance (9, 10, 11) is associated with each electrode (2, 3, 4), the lances (9, 10, 11) being distributed substantially uniformly over the circumference of the furnace (1), **in that** the angle of the lances (9, 10, 11) and thus the insufflation angle is selected so that they are at an angle of approximately 30° to 80° to the flow direction (6) of the molten bath (5) and at an angle of approximately 10° to 30° to the horizontal, **in that** the insufflation area acted upon by the respective lance (9, 10, 11) lies upstream of the electrode (2, 3, 4) in the flow direction of the molten bath and **in that**, in addition to coal, lime, filter dust, iron-containing dust (DRI), conditioned sludges and scale, alloys and/or mixtures of these substances are blown into the melt by means of the lances.

2. An electric arc furnace according to claim 1, **characterised in that** the height of the end of the lance above the surface of the molten bath is at most 200 mm.

3. An electric arc furnace according to claim 1 or 2, **characterised in that** at least the parts of the lances (9, 10, 11) set into the furnace wall (12) are water-cooled.

4. A method of operating an electric arc furnace according to any one of claims 1 to 3, **characterised in that**, at least during the smelting phase, oxygen and/or natural gas are additionally blown into the furnace via the lances.

5. A method according to claim 4, **characterised in that**, with the commencement of the hot operating phase, carbon and/or oxygen are alternately blown into the furnace via the lances.

6. A method according to claim 5, **characterised in that** the material flow in the feed line to each lance is individually controlled or regulated and monitored.

7. A method according to any one of claims 1 to 6, **characterised in that** the solids are fed into the furnace via a central opening (16) of the lances (9, 10, 11) and the gases are fed in via an interspace (15) surrounding the central opening (16).

8. A method according to any one of claims 4 to 7, **characterised in that** the lances are constantly acted upon by a conveying gas, in particular compressed air.

## Revendications

1. Four à arc électrique (1) dans lequel des matières solides et des gaz sont injectés à l'intérieur du four au moyen de lances (9, 10, 11) afin d'obtenir un laitier mousseux pour la réduction ou l'alliage d'une masse fondue ou le recyclage de matériaux,
**caractérisé en ce que**
les lances (9, 10, 11) traversent la paroi (12) du four à arc électrique (1) et sont insérées dans la paroi (12) du four, **en ce qu'**à chaque électrode (2, 3, 4) est attribuée au moins une lance (9, 10, 11), les lancés (9, 10, 11) étant réparties de manière sensiblement homogène sur toute la circonférence du four (1), **en ce que** l'inclinaison des lances (9, 10, 11) et, par conséquent, l'angle d'injection, est sélectionnée de manière à ce que celles-ci forment, par rapport au sens d'écoulement (6) du bain de fusion (5), un angle compris entre environ 30° et 80° et, par rapport à l'horizontale, un angle compris entre environ 10 et 30° environ, **en ce que** la surface d'injection couverte par chacune des lances (9, 10, 11) se trouve, dans le sens d'écoulement du bain de fusion, devant l'électrode (2, 3, 4) correspondante, et **en ce qu'**il est possible d'injecter dans la masse fondue, au moyen des lances, outre du charbon, du calcaire, des poussières de filtrage, des poussières ferrugineuses (DRI), des boues et des calamines traitées ainsi que des alliages et/ou des mélanges de ces matériaux.

2. Four à arc électrique selon la revendication 1, **caractérisé en ce que** l'extrémité de la lance se trouve à une hauteur maximale de 200 mm au-dessus de la surface du bain de fusion.

3. Four à arc électrique selon la revendication 1 ou 2, **caractérisé en ce qu'**au moins les parties des lances (9, 10, 11) insérées dans la paroi (12) du four sont refroidies à l'eau.

4. Procédé d'exploitation d'un four à arc électrique selon l'une des revendications 1 à 3, **caractérisé en ce que** de l'oxygène et/ou du gaz naturel sont, au moins durant la phase de fusion, injectés en supplément dans le four par l'intermédiaire des lances.

5. Procédé selon la revendication 4, **caractérisé en ce que**, dès le début de la phase de montée en température, du carbone et/ou de l'oxygène sont alternativement injectés dans le four par l'intermédiaire des lances.

6. Procédé selon la revendication 5, **caractérisé en ce que** le flux de matières dans le conduit d'alimentation de chaque lance est commandé ou réglé et contrôlé de manière individuelle.

7. Procédé selon l'une des revendications 1 à 6, **caractérisé en ce que** les matières solides sont introduites dans le four par une ouverture centrale (16) des lances (9, 10, 11) et les gaz par un espace intermédiaire (15) entourant l'ouverture centrale (16).

8. Procédé selon l'une des revendications 4 à 7, **caractérisé en ce que** les lances sont continuellement traversées par un gaz primaire, notamment de l'air comprimé.
